(19) Europäisches Patentamt / European Patent Office / Office européen des brevets

(11) **EP 4 295 971 B1**

(12) **EUROPEAN PATENT SPECIFICATION**

(45) Date of publication and mention
of the grant of the patent:
**23.07.2025 Bulletin 2025/30**

(21) Application number: **22382589.4**

(22) Date of filing: **22.06.2022**

(51) International Patent Classification (IPC):
*B22F 1/052* (2022.01)    *B22F 1/105* (2022.01)
*B22F 1/107* (2022.01)    *B22F 5/00* (2006.01)
*B22F 7/08* (2006.01)    *B22F 10/25* (2021.01)
*B33Y 10/00* (2015.01)    *B33Y 40/10* (2020.01)
*B33Y 80/00* (2015.01)    *C22C 19/05* (2006.01)
*C22C 33/08* (2006.01)    *C22C 37/10* (2006.01)
*C22C 38/02* (2006.01)    *C22C 38/04* (2006.01)
*C22C 38/44* (2006.01)    *B22C 3/00* (2006.01)
*B22C 9/02* (2006.01)    *C21C 1/08* (2006.01)
*C21C 1/10* (2006.01)    *C22C 38/34* (2006.01)

(52) Cooperative Patent Classification (CPC):
(C-Sets available)
B22F 10/25; B22C 3/00; B22C 9/02; B22F 1/052;
B22F 1/105; B22F 1/107; B22F 5/007; B22F 7/08;
B33Y 10/00; B33Y 40/10; B33Y 80/00; C21C 1/08;
C21C 1/10; C22C 19/057; C22C 33/08;    (Cont.)

(54) **METHOD FOR PRODUCING A CAST IRON PART WITH INCREASED CORROSION RESISTANCE AND/OR WEAR RESISTANCE, AND THE CAST IRON PART OBTAINED BY SAID METHOD**

VERFAHREN ZUM PRODUZIEREN EINES GUSSEISENTEILS MIT ERHÖHTER KORROSIONSBESTÄNDIGKEIT UND/ODER VERSCHLEISSBESTÄNDIGKEIT UND DAS DURCH DIESES VERFAHREN ERHALTENE GUSSEISENTEIL

PROCÉDÉ DE FABRICATION D'UNE PIÈCE MOULÉE EN FONTE PRÉSENTANT UNE MEILLEURE RÉSISTANCE À LA CORROSION ET/OU UNE MEILLEURE RÉSISTANCE À L'USURE, ET PIÈCE MOULÉE EN FONTE OBTENUE SELON LEDIT PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.12.2023 Bulletin 2023/52**

(73) Proprietor: **Fundación Azterlan**
**48200 Durango (Bizkaia) (ES)**

(72) Inventors:
• **Artola Beobide, Garikoitz**
**48200 Durango (Bizkaia) (ES)**
• **Mardaras Andres, Enara**
**48200 Durango (Bizkaia) (ES)**
• **González Martínez, Rodolfo**
**48200 Durango (Bizkaia) (ES)**

(74) Representative: **Balder IP Law, S.L.**
**Paseo de la Castellana 93**
**5ª planta**
**28046 Madrid (ES)**

(56) References cited:
DE-A1- 102011 056 307    IT-A1- 201900 012 180
US-A1- 2021 308 795

• **LESTAN ZORAN ET AL: "Laser deposition of Metco 15E, Colmony 88 and VIM CRU 20 powders on cast iron and low carbon steel", THE INTERNATIONAL JOURNAL OF ADVANCED MANUFACTURING TECHNOLOGY, vol. 66, no. 9-12, 1 June 2013 (2013-06-01), London, pages 2023 - 2028, XP055979292, ISSN: 0268-3768, Retrieved from the Internet <URL:https://link.springer.com/content/pdf/10.1007/s00170-012-4478-4.pdf> [retrieved on 20221108], DOI: 10.1007/s00170-012-4478-4**

- **SUBSTRATE ET AL: "Figure 1: Laser deposition. Laser Powder Shield Gas Melt Pool CONTROL OF HEATING AND COOLING FOR DIRECT LASER DEPOSITION REPAIR OF CAST IRON COMPONENTS", PROCEEDINGS OF ISFA2016 2016 INTERNATIONAL SYMPOSIUM ON FLEXIBLE AUTOMATION CLEVELAND, 3 August 2016 (2016-08-03), XP055979293, Retrieved from the Internet <URL:https://ieeexplore.ieee.org/stampPDF/getPDF.jsp?tp=&arnumber=7790166&ref=> [retrieved on 20221108]**
- **LIU YONGFENG ET AL: "Characterization of wear properties of the functionally graded material deposited on cast iron by laser-aided additive manufacturing", THE INTERNATIONAL JOURNAL OF ADVANCED MANUFACTURING TECHNOLOGY, SPRINGER, LONDON, vol. 105, no. 10, 12 February 2019 (2019-02-12), pages 4097 - 4105, XP036964695, ISSN: 0268-3768, [retrieved on 20190212], DOI: 10.1007/S00170-019-03414-W**

(52) Cooperative Patent Classification (CPC): (Cont.)
**C22C 37/10; C22C 38/02; C22C 38/04; C22C 38/34; C22C 38/44;** B22F 2999/00

C-Sets
B22F 2999/00, B22F 7/08, B22F 3/22

## Description

### TECHNICAL FIELD

The present invention provides a method for producing cast iron part with an increased corrosion resistance and/or wear resistance combining surface modification by *in-situ* casting and laser directed energy deposition (L-DED). Besides that, the present invention also provides a cast iron part obtained or obtainable by the method described herein.

### BACKGROUND OF THE ART

Cast iron is widely used in the manufacturing of several components with complex geometry and cavities due to its good castability, low cost and excellent machinability. The most common types of cast iron are grey cast iron, vermicular cast iron and spheroidal cast iron. Currently, different technologies of surface modification are used to increase the wear and/or corrosion resistance, such as thermo-reactive diffusion treatment (TRD), laser cladding (LC), physical vapor deposition (PVD), *in-situ* casting heat treatment reaction, plasma jet cladding, etc. Although good results can be obtained by these technologies, there are still many problems such as limitation on coating thickness, high cost and complex equipment.

Surface modification by *in-situ* casting combines the technologies of casting and chemical reaction at the surface, some of them are based on the casting of the cast iron in a carbide plate with a subsequent heat treatment, another method used an *in-situ* solid-solid reaction between the carbide plate and the iron plate as a subsequent heat treatment or by covering the sand mold surfaces with a slurry. These *in-situ* techniques generate coatings with a series of excellent properties of corrosion and wear resistance, however, some of these methods require additional processes, such as heat treatment, that significantly increases the cost of the final product.

To increase the wear and/or corrosion resistance of cast iron parts without substantially increasing its price, laser cladding has been proposed as an alternative method. However, laser cladding on cast iron is a difficult and complex process because it can generate heterogeneous thermal and stress fields as result of the graphite and matrix properties, formation of pores for the carbon dioxide produced during the laser beam radiates and formation of hard and brittle phases (martensite and ledeburite) due to the high cooling rate and may lead to crack formation.

Some of these problems can in some cases be solved with the use of a preheating in the substrate, double or multilayer deposited by laser cladding. However, these methods are accompanied by considerable energy consumption, poor production efficiency, price increase, etc. Examples of the above can be found in Lestan Zoran et al., "Laser deposition of Metco 15E, Colmony 88 and VIM CRU 20 powders on cast iron and low carbon steel, The International Journal of Advanced Manufacturing Technology, vol. 66, no. 9-12, 1 June 2013, pages 2023-2028; J. Bennet et al., "Control of heating and cooling for direct laser deposition repair of cast iron components", Proceedings of ISFA2016 2016 International Symposium on Flexible Automation Cleveland, 3 August 2016; Liu Yongfeng et al., "Characterization of wear properties of the functionally graded material deposited on cast iron by laser-aided additive manufacturing", The International Journal of Advanced Manufacturing Technology, vol. 105, no. 10, 12 February 20219, pages 4097-4105; and patent applications IT 2019 0001 2180 A1 (ITT Italia SRL), US 2021/308795 A1 (Baesgen Alexander) and DE 10 2011 056307 A1 (Porsche AG). Therefore, there is still the need in the state of the art of a solution that solves drawbacks of the technologies currently used to increase wear and/or corrosion resistance of a cast iron part or component, in particular for components with complex geometry or to cover localized areas.

### DESCRIPTION OF THE INVENTION

The present invention provides a method for producing a cast iron part which combines surface modification by an *in-situ* casting with laser directed energy deposition (L-DED). This surface modification prior to the deposition L-DED coating removes the drawbacks commonly associated with laser cladding (LC), in particular the method described herein is able to avoid brittle phase formation in the cast iron, carbide formation and the migration of chemical elements from the cast iron to the coating layer. In such a way that properties of the cast iron components such as corrosion resistance and/or wear resistance can be more effectively optimized thanks this combination of surface modification by *in-situ* casting with L-DED.

Thus, the instant patent application provides a method for producing a cast iron part having an increased corrosion and/or wear resistance.

The scope of the present invention is defined by independent claims 1 and 10, and further embodiments of the invention are specified in dependent claims 2-9.

The first metallic material comprised in the reactive paint obtained in stage a) of the method described herein is preferably a metallic particulate such as, for example, powder, fine chips, grainy, insert or strip of sheet, which may have a size not higher than 1 mm. Preferably, the first metallic material is powder (*i.e.,* a metallic powder).

In some particular embodiments, the first metallic material may be powder and, preferably, powder having a particle size distribution contained in the range of 1 mm to 20 $\mu$m, more preferably of 500 $\mu$m to 20 $\mu$m, and even more preferably of 160 $\mu$m to 40 $\mu$m, wherein said particle size distribution is determined by sieving.

The first metallic material is a metal alloy comprising:

equal to or more than 10 wt. % of Cu + Al + Ni + Co + Mn,
equal to or less than 0.05 wt. % of C,
equal to or less than 30 wt. % of Cr,
equal to or less than 15 wt. % of Mo,
equal to or less than 4 wt. % of Ta,
equal to or less than 3 wt. % of Si,
equal to or less than 3 wt. % of Nb,
equal to or less than 3 wt. % of V,
equal to or less than 15 wt. % of W,
equal to or less than 1 wt. % of each other unspecified element, wherein the total amount of unspecified elements is equal to or less than 5 wt. %, and
Fe as balance,

preferably with the proviso that the amount of each one of Cr, Mo and W is lower than the sum of Cu + Al + Ni + Co + Mn.

The first metallic material is preferably an Ni-Co alloy comprising an amount of C equal to or less of 0.05 wt. %, since this alloy can provide the desired surface modification to the cast iron member without generating carbides.

In preferred embodiments of the method described herein, the first metallic material is a Ni-Co alloy comprising:

equal to or more than 15 wt. % of Ni + Co, wherein the amount of Ni is not lower than 10 wt. %,
equal to or less than 6 wt. %, preferably equal to or less than 0.5 wt. %, of Al,
equal to or less than 5 wt. %, preferably less 5 wt. % of Mn,
equal to or less than 0.05 wt. %, preferably equal to or less than 0.01 wt. %, of C,
equal to or less than 8 wt. %, preferably equal to or less than 5 wt. %, of Cr,
equal to or less than 8 wt. %, preferably equal to or less than 1 wt. %, of Mo,
equal to or less than 4 wt. %, preferably equal to or less than 0.5 wt. %, of Ta,
equal to or less than 1 wt. %, preferably equal to or less than 0.5 wt. %, of Ti,
equal to or less than 1 wt. %, preferably equal to or less than 0.5 wt. %, of Si,
equal to or less than 0.5 wt. % of Nb,
equal to or less than 0.5 wt. % of V,
equal to or less than 0.5 wt. % of W,
equal to or less than 0.5 wt. % of each other unspecified element, wherein the total amount of unspecified elements is equal to or less than 5 wt. %, and
Fe as balance, preferably equal to or less than 0.5 wt. %;

with the proviso that the amount of Fe is lower than the sum of Ni + Co.

The binder used in stage a) to obtain the reactive paint can be organic or inorganic. On the one hand, organic binders can be, for example, casting resins such as silanes, furanic or phenolic resins. On the other hand, inorganic binders can be water or alcohol base solutions comprising an inorganic precursor. Said inorganic precursor can be colloidal such as colloidal silica, or non-colloidal such as a silicate, in particular, ethyl silicate or sodium silicate.

In particular embodiments, the binder is a sodium silicate aqueous solution, more specifically a sodium silicate aqueous solution comprising of at least 25 wt. % of sodium silicate by weight of the solution.

The reactive paint obtained in stage a) may also comprise other additives such as surfactants, defoamers or a combination thereof and/or a solvent, in particular water or an alcohol such as methanol, ethanol or propanol. These solvents are preferred because they can be easily removed from the sand mould at least partially coated with the reactive paint in stage c) of the method (see further details below).

The reactive paint can be obtained by mixing the required amounts of first metallic material, binder and, optionally, solvent. If further additives such as surfactants and/or defoamers are present in the reactive paint, the required amounts of said additives can also mixed with the first metallic material and the binder to obtain the reactive paint.

The reactive paint obtained in stage a) of the method for producing a cast iron part or component described herein preferably comprises 10-40 % weight of binder and 90-60% weight of first metallic material, wherein these percentages are expressed regarding the total weight amount of binder and first metallic material of the reactive paint.

In some particular embodiments, the reactive paint may have low adherence to the sand mould. More specifically, if the sand mould is highly porous, it might occur that the binder will be excessively absorbed, thus jeopardizing the deposition of the reactive paint on the sand mould surface. This might happen, for example, when the sand has a particle size higher than 1 mm and the reactive paint has lower than 10 wt. % of solid content.

To overcome this drawback, the method for producing a cast iron part or component described in this document may comprise an additional stage b-1), prior to stage b), wherein the sand mould is wetted prior to apply the reactive paint. This stage can be carried out by immersion of the sand mould in a water bath, preferably for at least one minute, or, alternative, by spraying water to the sand mould, so that its surface contains the required amount of water.

The reactive paint may be applied to the sand mould, optionally wetted as described in this document, by conventional means such as brush or immersion. If the sand mould has one or more cavities, the reactive paint can be applied by filling and subsequent emptying said cavities. In the method described herein, the reactive paint may be applied to all the surface of the sand mould or, alternatively, it may only be applied to one or more specific zones of the sand mould. In some particular embodiments, different reactive paints as described herein may be applied to different portions of the sand mould, thus obtaining a sand mould at least partially coated with different reactive paints.

Once the reactive paint(s) has/have been applied to either the total surface or one or more specific zones of the sand mould, the sand mould at least partially coated with reactive paint is dried in stage c) of the method described herein. This drying can be done allowing the sand mould to naturally dry at room temperature (i.e., without applying heat). For instance, the sand mould may be dried in a foundry plant environment for at least 24 hours. Since the evaporation of the binder and other volatile compounds such as solvents that might be present in the reactive paint(s) causes the sand mould surface to cool, the drying process can be controlled by measuring the temperature of said surface. The drying stage c) of the sand mould at least partially coated with reactive paint can be deemed to be finished when the surface of the mould achieves the same temperature than the room wherein said sand mould is being dried. Alternatively, the drying of the sand mould at least partially coated with reactive paint can be carried out at a temperature of 40 to 100°C for a period of at least 2 hours, preferable of 2 to 10 hours.

Then, the dried sand mould at least partially coated with the reactive paint may be assembled to obtain a sand mould ready for casting in stage d) of the method for producing a cast iron part described herein.

The cast iron melt casted in stage d) of the method described herein may have the chemical composition of any known cast iron such as, in particular, a ductile iron alloy. More specifically, the cast iron may be selected from EN-GJS-350-22-LT, EN-GJS-350-22-RT, EN-GJS-350-22, EN-GJS-400-18-LT, EN-GJS-400-18-RT, EN-GJS-400-18, EN-GJS-400-15, EN-GJS-450-10, EN-GJS-500-7, EN-GJS-600-3, EN-GJS-700-2, EN-GJS-800-2, EN-GJS-900-2, EN-GJS-450-18, EN-GJS-500-14, EN-GJS-600-10, EN-GJL-100, EN-GJL-150, EN-GJL-250, EN-GJL-300 and EN-GJL-350a.

The melt of the cast iron to be poured into the dried sand mould at least partially coated with reactive paint can be prepared from conventional raw materials such as pig iron, steel, soft iron, graphite, ferroalloys among others. The raw materials can be put in contact according to conventional methods which may include steps such as mixing component, melting, adjusting the alloy composition by adding further components, melt treatment and, optionally, inoculation with known inoculating materials.

The cast iron melt of stage d) of the method described herein comprises:

$$Ceq \text{ (wt. \%)} = C \text{ (wt. \%)} + [1/3 \times Si \text{ (wt. \%)}] = \text{Eutectic} \pm 0.2,$$

1.40 to 3.40 wt. % of Si,
equal to or less than 2.0 wt. % of Cu,
0.10 to 0.40 wt. % of Mn, and
iron as balance.

As commonly known in the art, the eutectic point occurs at a composition of 4.26 wt. % C for the iron-carbon system. Thus, the amount of C in cast iron melt according to these embodiments may be of 2.93 to 4.00 wt. %.

The filling of the dried, and optionally assembled, sand mould at least partially coated with reactive paint with molten cast iron as described in this document is preferably performed by pouring the cast iron melt into said sand mould following a laminar flow, more preferably a laminar flow with a Reynolds number (Re) of 2300 to 13800, even more preferably of 2500 to 5000. In such a way, turbulence and impact on reactive paint coated areas of the sand mould can be avoided and, therefore, the reactive paint remains on its place after the sand mould is completely filled. This laminar flow can be achieved, for example, by design of the filling system of the sand mould. The Reynolds number can be determined by a commercially available simulation software commonly known in the art such as ProCAST, Magma or QuikCAST.

After pouring, the mould filled with the iron alloy melt can be cooled in a conventional manner, thus allowing the solidification of the casting, and the sand mould removed to obtain an at least partially surface modified cast iron part or component.

During casting process, alloying elements of the first metallic material are transferred from the sand mould to the cast iron surface, thus creating *in-situ* a modified surface layer (also called "first surface modified layer" in this document) by using the heat content of a molten cast iron. This modified surface layer preferably presents a thickness of 0.15 mm to 2 mm, more preferably of 1 mm to 2 mm. This first surface layer may be present in the whole surface of the cast iron part or component or, alternative, it may be present only in specific zones of said part or components, thus providing a great versatility to the method described herein.

The first surface modified layer applied by *in-situ* casting has different chemical composition and microstructure than cast iron. The main differences are that it has less graphite content and other matrix phases. Unexpectedly, the inventors found that the presence of this first surface layer on the cast iron provides significant advantages when the L-DED technology is used for improving corrosion and/or wear resistance of said cast iron part or component. Thus, the combination of surface modification by *in-situ* casting and L-DED provided by the method described herein is able to achieve the great advantages of L-DED, while avoiding some important drawbacks of the laser cladding process such as the generation of heterogenous heating, stress fields and formation of hard and brittle phases which can lead to cracking. Furthermore, there is minimal interaction of the base cast iron with the L-DED coating material, while avoiding hardening of the cast iron.

The cast iron part obtained in stage d) of the method described herein, which comprises at least one surface portion modified with the first metallic material, optionally all its surface is modified with such first metallic material, is conditioned prior to be L-DED coated. This conditioning stage comprises cleaning by shot blasting or machining the surface of the cast iron to remove any residue from the sand mould.

Thus, depending on the final use of the cast iron part obtained by the method described herein, the cast iron part comprising at least one surface portion modified with the first metallic material obtained in stage d) is shot blasted or machined, with the proviso that the machining depth leaves a minimum modified layer thickness of 0.15 mm, preferably a minimum modified layer thickness of 0.3 mm.

The method for producing a cast iron part or component described in this document further comprises stage f), wherein at least one layer of a second metallic material is deposited on surface portions modified with the first metallic material (*i.e.,* on the first surface modified layer), wherein said at least one layer of second metallic material is deposited by laser directed energy deposition (L-DED), and said second metallic material is selected from an anti-corrosion material, an anti-wearing material; and an anti-corrosion and anti-wearing material, and it is an iron base alloy comprising equal to or more than 5 wt. % of Cr + Mo + Ni. In the method described herein, one or more layers of the second metallic material can be deposited on all portions of the cast iron part wherein the first surface modified layer is present or, alternative, it can be deposited only to some of them.

The second metallic material deposited on the first surface modified layer by L-DED in stage f) of the method described herein is selected from an anti-corrosion material, an anti-wearing material; and an anti-corrosion and anti-wearing material and, therefore, it is characterized by increasing corrosion resistance and/or wear resistance of cast iron. Those materials are broadly known in the art and, therefore, the skilled person may select them without undue burden.

Said second metallic material can be metallic powder or metallic wire.

A material can be considered an anti-corrosion material, if it is capable of generating a passive layer or very low corrosion weight loss under a given environment. This environment dependence gives a wide range of anti-corrosion materials that might be used. For example, high Cu alloys, such as Bronze are appropriate for marine environments, stainless steels with an amount of Cr equal or higher than 10 wt. % cover a wide range of applications, nickel alloys (Ni content equal or higher than 40 wt. %) and cobalt alloys (Co content equal or higher than 40 wt. %) are widely used in high chloride content media and high temperature corrosion.

A material can be considered an anti-wearing material if its hardness is equal or higher than 45 HRC (standard hardness Rockwell-C) and it has a hard phase (carbide, nitride and/or oxide) dispersion content equal or higher than 25 % in volume.

The combination of the two above gives anti-wear plus anti-corrosion materials. High Entrophy Alloys are a special case of anti-corrosion + anti-wear, since they fulfil both targets despite not having hard phase dispersions.

The second metallic material deposited by L-DED in stage f) is an iron base alloy such as tool steels or stainless steels. More specifically, the second metallic material is an iron base alloy comprising equal to or more than 5 wt. % of Cr + Mo + Ni.

In more particular embodiment, the second metallic material deposited by L-DED in stage f) is a stainless-steel alloy comprising:

> 16 to 18 wt. % of Cr,
> 2 to 3 wt. % of Mo,
> 10 to 14 wt. % of Ni,
> equal to or less than 5 wt. % of Si,
> equal to or less than 2 wt. % of Mn,
> equal to or less than 0.08 wt. % of C,

equal to or less than 0.5 wt. % of each other element, wherein the total amount of unspecified elements is equal to or less than 1 wt. %, and
iron as balance.

More specifically, said second metallic material is a 316L-Si powder, preferably with a particle size distribution contained in the range of 50 to 150 $\mu$m, preferably of 45 to 106 $\mu$m (determined by sieving), and the following chemical composition Cr 17 wt. %, Ni 12 wt. %, Mo 2.5 wt. %, Si 5 wt. %, Mn 1.0 wt. %, C equal to or less than 0.08 wt. %, less than 0.5 wt. % of each other element, wherein the total amount of unspecified elements is equal to or less than 1 wt. %, and iron as balance.

The L-DED may be carried out by conventional means known by in the art. In particular said process may be carried out at a laser powder of 1000 to 5000 W and/or with a spot diameter of 2 to 4 mm.

The present specification also refers to a cast iron part or component obtained or obtainable by the method described herein. Said cast iron part or component is characterized by comprising a first modified surface layer in at least some portions of its surface and, additionally, one or more second layers deposited over this first modified surface layer, wherein the first and the second layers has different composition and microstructure, as well as different physical, tribological, electrochemical and chemical properties.

Besides that, this cast iron part or component advantageously may have better properties of wear resistance and/or corrosion resistance than cast iron since the first modified surface layer is able to avoid the cracking problems in the surface. In particular embodiments, the cast iron part or component obtained or obtainable by the method described herein can achieve corrosion resistance and wear resistance equivalent to those achieved by wrought materials. More specifically, the wear resistance may comply with the requirements of AISI H13 grade, whereas the corrosion resistance may comply with the requirements of 5A duplex grade (ASTM A890/ A 890 M).

**EXAMPLES**

**Example 1: Method for producing a cast iron part**

A reactive paint was obtained by mixing 75 wt. % of a Ni-Co alloy powder with 25 wt. % of a sodium silicate aqueous solution (30 % w/w of sodium silicate), wherein these percentage are expressed regarding the total weight amount of binder and first metallic material of the reactive paint.

The Ni-Co alloy (first metallic material) was a powder with a particle size distribution in the range of 45 $\mu$m to 150 $\mu$m (by sieving), and chemical composition:
64 wt. % Ni, 10 wt. % Co, 0.01 wt. % C, 8 wt. % Cr, 6 wt. % Mo, 6 wt. % Al, 4 wt. % Ta, 1 wt. % Ti, equal to or less than 0.5 wt. % of each other unspecified element, wherein the total amount of unspecified elements is equal to or less than 5 wt. %.

A sand mould was used with rectangular shape. The sand mould component was wetted by immersion in a bath with water for a period of 1 minute. After, the wetted sand mould is painted with the reactive paint by filling in all bottom side of the mould. Then, that sand mould partially coated with the reactive paint (*i.e.,* coated in its bottom side) was dried during a day in a foundry plant environment.

On the other hand, a melt of the ductile iron alloy was prepared from conventional raw materials such as pig iron, steel, soft iron, graphite, ferroalloys, among others. The raw materials were put in contact according to conventional methods. The melt obtained had the following chemical composition (percentages expressed by weight with respect to the total weight of the ductile iron alloy):

C 3.60 wt. %, Si 2.20 wt. %, Cu 0.4 wt. %, Mn 0.16 wt. %, Mg 0.034 %, P less than 0.050 wt. % and S less than 0.010 wt. %,
equal to or less than 0.05 wt. % of each other element, wherein the total amount of unspecified elements is equal to or less than 1 wt. %, and
iron as balance.

The cast iron melt at a temperature of 1450°C was poured to the partially coated sand mould following a laminar flow having a Reynolds number (Re) of 3000, to avoid a direct flow over the layer of reactive paint. The solidification of the casting and subsequent cooling in the mould was carried out in a conventional manner. During that process, alloying elements of the reactive paint such as Ni, Cr, Mo and Co were transferred to cast iron surface. The result was an *in-situ* modified surface layer which presented a thickness of 1 mm to 2 mm.

Then, cast components or part were removed from the mould. The modified surface was conditioned by cleaning by shot blasting or machining before L-DED was carried out.

For the L-DED process was used a metallic particulate powder (second metallic material) with the following composition:

316L-Si powder with particle size distribution in the range of 45 μm to 106 μm (by sieving), and chemical composition; Cr 17 wt. %, Ni 12 wt. %, Mo 2.5 wt. %, Si 5 wt. %, Mn 1.0 wt. %, C equal to or less than 0.08 wt. %, and other less than 0.5 wt. %; wherein the total amount of unspecified elements is equal to or less than 1 wt. %, and iron as balance.

Then, L-DED process was carried out on the cast iron components which have been modified by reaction with the reactive paint. In particular, one layer of the second metallic material was deposited on the first modified surface layer previously applied by *in-situ* casting. This deposition was carried out following a conventional L-DED process, at a laser powder of 2500 W and a spot diameter of 3.5 mm.

The result of that method was a cast iron part with a high corrosion resistant coating. In particular, a corrosion resistance equivalent to that achieved by wrought materials of the same alloy. More specifically, the corrosion resistance of the cast iron part obtained complied with the requirements of 5A duplex grade (ASTM A890/ A 890 M). Besides that, the composition of the layer of the second metallic material had not been poisoned by the Carbon from the cast iron. Below these high corrosion resistance areas, the cast iron retained the bulk properties of the part as the melting of the iron during the L-DED had been limited to the depth of the first modified surface layer.

**Claims**

1.  A method for producing a cast iron part, wherein the method combines surface modification by an *in-situ* casting with laser directed energy deposition (L-DED) and comprises the following stages:

    a) obtaining a reactive paint comprising at least one first metallic material and at least one binder, wherein the first metallic material is a metal alloy comprising:

     equal to or more than 10 wt. % of Cu + Al + Ni + Co + Mn,
     equal to or less than 0.05 wt. % of C,
     equal to or less than 30 wt. % of Cr,
     equal to or less than 15 wt. % of Mo,
     equal to or less than 4 wt. % of Ta,
     equal to or less than 3 wt. % of Si,
     equal to or less than 3 wt. % of Nb,
     equal to or less than 3 wt. % of V,
     equal to or less than 15 wt. % of W,
     equal to or less than 1 wt. % of each other unspecified element, wherein the total amount of unspecified elements is equal to or less than 5 wt. %, and
     Fe as balance;

    b) applying the reactive paint to a sand mould to obtain a sand mould at least partially coated with reactive paint;
    c) drying the sand mould at least partially coated with reactive paint;
    d) casting a cast iron melt comprising

$$Ceq \ (wt. \ \%) = C \ (wt. \ \%) + [1/3 \times Si \ (wt. \ \%)] = Eutectic \pm 0.2,$$

     1.40 to 3.40 wt. % of Si,
     equal to or less than 2.0 wt. % of Cu,
     0.10 to 0.40 wt. % of Mn, and
     iron as balance;
     wherein this stage comprises:

      pouring the cast iron melt into the dried sand mould at least partially coated with reactive paint, and cooling the poured cast iron melt to obtain a cast iron part comprising at least one surface portion modified with the first metallic material;

    e) conditioning the cast iron part obtained in stage d) by shot blasting or machining the surfaces of the cast iron to remove any residue from the sand mould, with the proviso that it leaves a minimum modified layer thickness of 0.15 mm; and
    f) depositing at least one layer of a second metallic material on at least one of the surface portions modified with the first metallic material, wherein said at least one layer of the second metallic material is deposited by laser directed energy deposition (L-DED), and said second metallic material is selected from an anti-corrosion material, an anti-wearing material, and an anti-corrosion and anti-wearing material; and it is an iron base alloy comprising equal to or more than 5 wt. % of Cr + Mo + Ni.

2. The method of claim 1, wherein the first metallic material of stage a) is powder having a particle size distribution contained in the range of 1 mm to 20 $\mu$m, wherein the particle size distribution is measured by sieving.

3. The method of claims 1 or 2, wherein the first metallic material is a Ni-Co alloy comprising:

> equal to or more than 15 wt. % of Ni + Co, wherein the amount of Ni is not lower than 10 wt. %,
> equal to or less than 6 wt. %, preferably equal to or less than 0.5 wt. %, of Al,
> equal to or less than 5 wt. %, preferably less 5 wt. % of Mn,
> equal to or less than 0.05 wt. %, preferably equal to or less than 0.01 wt. %, of C,
> equal to or less than 8 wt. %, preferably equal to or less than 5 wt. %, of Cr,
> equal to or less than 8 wt. %, preferably equal to or less than 1 wt. %, of Mo,
> equal to or less than 4 wt. %, preferably equal to or less than 0.5 wt. %, of Ta,
> equal to or less than 1 wt. %, preferably equal to or less than 0.5 wt. %, of Ti,
> equal to or less than 1 wt. %, preferably equal to or less than 0.5 wt. %, of Si,
> equal to or less than 0.5 wt. % of Nb,
> equal to or less than 0.5 wt. % of V,
> equal to or less than 0.5 wt. % of W,
> equal to or less than 0.5 wt. % of each other unspecified element, wherein the total amount of unspecified elements is equal to or less than 5 wt. %, and
> Fe as balance;
> with the proviso that the amount of Fe is lower than the sum of Ni + Co.

4. The method of any one of claims 1 to 3, wherein the binder is a sodium silicate aqueous solution.

5. The method of any one of claims 1 to 4, wherein the reactive paint obtained in stage a) comprises of 10 wt. % to 40 wt. % of binder and of 90 wt. % to 60 wt. % of first metallic material, wherein these percentages are expressed regarding the total weight amount of binder and first metallic material of the reactive paint.

6. The method of any one of claims 1 to 5, further comprising stage b-1), prior to stage b), wherein a sand mould is wetted by immersion in a water bath or spraying with water.

7. The method of any one of claims 1 to 6, wherein the at least partially surface modified cast iron obtained in stage d) comprises a modified surface layer having a thickness of 0.15 mm to 2 mm.

8. The method of any one of claims 1 to 7, wherein the second metallic alloy is a stainless-steel alloy comprising:

> 16 to 18 wt. % of Cr,
> 2 to 3 wt. % of Mo,
> 10 to 14 wt. % of Ni,
> equal to or less than 5 wt. % of Si,
> equal to or less than 2 wt. % of Mn,
> equal to or less than 0.08 wt. % of C,
> equal to or less than 0.5 wt. % of each other element, wherein the total amount of unspecified elements is equal to or less than 1 wt. %, and
> iron as balance.

9. The method of any one of claims 1 to 8, wherein the L-DED is carried out at a laser powder of 1000 to 5000 W and a spot diameter of 2 to 4 mm.

10. A cast iron part obtained by the method as described in any one of claims 1 to 9.

**Patentansprüche**

1. Ein Verfahren zur Herstellung eines Gusseisenteils, wobei das Verfahren eine Oberflächenmodifikation durch ein In-situ-Gießen mit Laserauftragschweißen (L-DED) kombiniert und folgende Schritte umfasst:

   a) Bereitstellen einer reaktiven Beschichtung, die mindestens ein erstes metallisches Material und mindestens ein Bindemittel umfasst, wobei das erste metallische Material eine Metalllegierung ist, umfassend:

   gleich oder mehr als 10 Gew.-% von Cu + Al + Ni + Co + Mn,
   gleich oder weniger als 0,05 Gew.-% von C,
   gleich oder weniger als 30 Gew.-% von Cr,
   gleich oder weniger als 15 Gew.-% von Mo,
   gleich oder weniger als 4 Gew.-% von Ta,
   gleich oder weniger als 3 Gew.-% von Si,
   gleich oder weniger als 3 Gew.-% von Nb,
   gleich oder weniger als 3 Gew.-% von V,
   gleich oder weniger als 15 Gew.-% von W,
   gleich oder weniger als 1 Gew.-% von jedem anderen nicht spezifizierten Element, wobei die Gesamtmenge der nicht spezifizierten Elemente gleich oder weniger als 5 Gew.-% beträgt, und
   Fe als Rest;

   b) Auftragen der reaktiven Beschichtung auf eine Sandform, um eine mindestens teilweise mit der reaktiven Beschichtung beschichtete Sandform zu erhalten;
   c) Trocknen der mindestens teilweise mit der reaktiven Beschichtung beschichteten Sandform;
   d) Gießen einer Gusseisenschmelze, umfassend:

   $Ceq$ (Gew.-%) = C (Gew.-%) + [1/3 x Si (Gew.-%)] = Eutektikum $\pm$ 0,2,

   1,40 bis 3,40 Gew.-% Si,
   gleich oder weniger als 2,0 Gew.-% Cu,
   0,10 bis 0,40 Gew.-% Mn,
   und Eisen als Rest;

   wobei dieser Schritt umfasst:

   Eingießen der Gusseisenschmelze in die getrocknete, mindestens teilweise mit der reaktiven Beschichtung versehene Sandform, und
   Abkühlen der eingegossenen Gusseisenschmelze, um ein Gusseisenteil zu erhalten, das mindestens einen mit dem ersten metallischen Material modifizierten Oberflächenbereich aufweist;

   e) Konditionieren des in Schritt d) erhaltenen Gusseisenteils durch Strahlen oder Bearbeiten der Oberflächen des Gusseisenteils, um jegliche Rückstände aus der Sandform zu entfernen, wobei jedoch eine mindestens 0,15 mm dicke modifizierte Schicht verbleibt; und
   f) Aufbringen von mindestens einer Schicht eines zweiten metallischen Materials auf mindestens einem der mit dem ersten metallischen Material modifizierten Oberflächenbereiche, wobei besagte mindestens eine Schicht des zweiten metallischen Materials durch Laserauftragschweißen (L-DED) aufgebracht wird, und wobei das zweite metallische Material aus einem Korrosionsschutzmaterial, einem Verschleißschutzmaterial und einem Korrosions- und Verschleißschutzmaterial ausgewählt ist; und es sich um eine Eisenbasislegierung handelt, die gleich oder mehr als 5 Gew.-% von Cr + Mo + Ni umfasst.

2. Das Verfahren nach Anspruch 1, wobei das erste metallische Material des Schritts a) ein Pulver mit einer Korngrößenverteilung im Bereich von 1 mm bis 20 $\mu$m ist, wobei die Korngrößenverteilung durch Sieben bestimmt wird.

3. Das Verfahren nach Anspruch 1 oder 2, wobei das erste metallische Material eine Ni-Co-Legierung ist, umfassend:

   gleich oder mehr als 15 Gew.-% von Ni + Co, wobei die Menge an Ni nicht kleiner als 10 Gew.-% ist,

gleich oder weniger als 6 Gew.-%, vorzugsweise gleich oder weniger als 0,5 Gew.-%, von Al,
gleich oder weniger als 5 Gew.-%, vorzugsweise weniger als 5 Gew.-%, von Mn,
gleich oder weniger als 0,05 Gew.-%, vorzugsweise gleich oder weniger als 0,01 Gew.-%, von C,
gleich oder weniger als 8 Gew.-%, vorzugsweise gleich oder weniger als 5 Gew.-%, von Cr,
gleich oder weniger als 8 Gew.-%, vorzugsweise gleich oder weniger als 1 Gew.-%, von Mo,
gleich oder weniger als 4 Gew.-%, vorzugsweise gleich oder weniger als 0,5 Gew.-%, von Ta,
gleich oder weniger als 1 Gew.-%, vorzugsweise gleich oder weniger als 0,5 Gew.-%, von Ti,
gleich oder weniger als 1 Gew.-%, vorzugsweise gleich oder weniger als 0,5 Gew.-%, von Si,
gleich oder weniger als 0,5 Gew.-% von Nb,
gleich oder weniger als 0,5 Gew.-% von V,
gleich oder weniger als 0,5 Gew.-% von W,
gleich oder weniger als 0,5 Gew.-% von jedem anderen nicht spezifizierten Element, wobei die Gesamtmenge der nicht spezifizierten Elemente gleich oder weniger als 5 Gew.-% beträgt, und
Fe als Rest,
mit der Maßgabe, dass die Menge an Fe kleiner ist als die Summe aus Ni + Co.

4. Das Verfahren nach einem der Ansprüche 1 bis 3, wobei das Bindemittel eine wässrige Lösung von Natriumsilikat ist.

5. Das Verfahren nach einem der Ansprüche 1 bis 4, wobei die in Schritt a) bereitgestellte reaktive Beschichtung 10 Gew.-% bis 40 Gew.-% Bindemittel und 90 Gew.-% bis 60 Gew.-% des ersten metallischen Materials umfasst, wobei diese Prozentsätze bezogen sind auf das Gesamtgewicht von Bindemittel und erstem metallischen Material der reaktiven Beschichtung.

6. Das Verfahren nach einem der Ansprüche 1 bis 5, weiterhin umfassend einen Schritt b-1) vor Schritt b), wobei eine Sandform durch Eintauchen in ein Wasserbad oder durch Besprühen mit Wasser benetzt wird.

7. Das Verfahren nach einem der Ansprüche 1 bis 6, wobei das in Schritt d) erhaltene, mindestens teilweise oberflächenmodifizierte Gusseisenteil eine modifizierte Oberflächenschicht mit einer Dicke von 0,15 mm bis 2 mm umfasst.

8. Das Verfahren nach einem der Ansprüche 1 bis 7, wobei die zweite metallische Legierung eine nichtrostende Stahllegierung ist, umfassend:

16 bis 18 Gew.-% Cr,
2 bis 3 Gew.-% Mo,
10 bis 14 Gew.-% Ni,
gleich oder weniger als 5 Gew.-% Si,
gleich oder weniger als 2 Gew.-% Mn,
gleich oder weniger als 0,08 Gew.-% C,
gleich oder weniger als 0,5 Gew.-% jedes anderen Elements, wobei die Gesamtmenge der nicht spezifizierten Elemente gleich oder weniger als 1 Gew.-% beträgt, und
Eisen als Rest.

9. Das Verfahren nach einem der Ansprüche 1 bis 8, wobei das Laserauftragschweißen (L-DED) mit einer Laserleistung von 1000 bis 5000 W und einem Spotdurchmesser von 2 bis 4 mm durchgeführt wird.

10. Ein Gusseisenteil, erhalten durch das Verfahren nach einem der Ansprüche 1 bis 9.

**Revendications**

1. Méthode de production d'une pièce en fonte, la méthode combinant une modification de surface par moulage *in situ* avec un dépôt sous énergie laser dirigée (L-DED) et comprenant les étapes suivantes consistant à :

a) obtenir une peinture réactive comprenant au moins un premier matériau métallique et au moins un liant, le premier matériau métallique étant un alliage de métal comprenant :

10 % en poids ou plus de Cu + Al + Ni + Co + Mn,

0,05 % en poids ou moins de C
30 % en poids ou moins de Cr,
15 % en poids ou moins de Mo,
4 % en poids ou moins de Ta,
3 % en poids ou moins de Si,
3 % en poids ou moins de Nb,
3 % en poids ou moins de V,
15 % en poids ou moins de W,
1 % en poids ou moins de chaque autre élément non spécifié, la quantité totale des éléments non spécifiés étant égale ou inférieure à 5 % en poids, et
du Fe en tant que reste ;

b) appliquer la peinture réactive à un moule au sable pour obtenir un moule au sable au moins partiellement revêtu d'une peinture réactive ;
c) sécher le moule au sable au moins partiellement revêtu avec une peinture réactive ;
d) mouler une matière fondue de fonte comprenant

$$\text{Ceq ( \% en poids)} = \text{C (\% en poids)} + [1/3 \times \text{Si ( \% en poids)}] = \text{Eutectique} \pm 0{,}2,$$

1,40 à 3,40 % en poids de Si,
2,0 % en poids ou moins de Cu,
0,10 à 0,40 % en poids de Mn, et
du fer en tant que reste ;
où cette étape comprend :
la coulée de la matière fondue de fonte dans le moule au sable séché au moins partiellement revêtu de peinture réactive, et
le refroidissement de la matière fondue de fonte coulée pour obtenir une pièce en fonte comprenant au moins une partie de surface modifiée avec le premier matériau métallique ;

e) conditionner la pièce en fonte obtenue à l'étape d) par grenaillage ou usinage des surfaces de la fonte afin d'éliminer tout résidu provenant du moule au sable, à condition qu'il reste une épaisseur de couche modifiée minimale de 0,15 mm ; et
f) déposer au moins une couche d'une deuxième matériau métallique sur au moins l'une des parties de surface modifiées par le premier matériau métallique, où ladite au moins une couche du deuxième matériau métallique est déposée par dépôt sous énergie laser dirigée (L-DED), et ledit deuxième matériau métallique est choisi parmi un matériau anti-corrosion, un matériau anti-usure, et un matériau anti-corrosion et anti-usure ; et c'est un alliage à base de fer comprenant 5 % en poids ou plus de Cr + Mo + Ni.

2. Méthode selon la revendication 1, dans laquelle le premier matériau métallique de l'étape a) est une poudre ayant une distribution de tailles de particules contenues dans la plage de 1 mm à 20 μm, la distribution de tailles de particules étant mesurée par tamisage.

3. Méthode selon les revendications 1 ou 2, dans laquelle le premier matériau métallique est un alliage de Ni-Co comprenant :

15 % en poids ou plus de Ni + Co, la quantité de Ni n'étant pas inférieure à 10 % en poids,
6 % en poids ou moins, de préférence 0,5 % en poids ou moins d'Al,
5 % en poids ou moins, de préférence moins de 5 % en poids de Mn,
0,05 % en poids ou moins, de préférence 0,01 % en poids ou moins de C,
8 % en poids ou moins, de préférence 5 % en poids ou moins de Cr,
8 % en poids ou moins, de préférence 1 % en poids ou moins de Mo
4 % en poids ou moins, de préférence 0,5 % en poids ou moins de Ta,
1 % en poids ou moins, de préférence 0,5 % en poids ou moins de Ti,
1 % en poids ou moins, de préférence 0,5 % en poids ou moins de Si,
0,5 % en poids ou moins de Nb,
0,5 % en poids ou moins de V,
0,5 % en poids ou moins de W,

0,5 % en poids ou moins de chaque autre élément non spécifié, la quantité totale des éléments non spécifiés étant égale ou inférieure à 5 % en poids, et

du Fe en tant que reste ;

à condition que la quantité de Fe soit inférieure à la somme de Ni + Co.

**4.** Méthode selon l'une quelconque des revendications 1 à 3, dans laquelle le liant est une solution aqueuse de silicate de sodium.

**5.** Méthode selon l'une quelconque des revendications 1 à 4, dans laquelle la peinture réactive obtenue à l'étape a) comprend 10 % en poids à 40 % en poids de liant et 90 % en poids à 60 % en poids de premier matériau métallique, ces pourcentages étant exprimés eu égard à la quantité en poids totale de liant et de premier matériau métallique de la peinture réactive.

**6.** Méthode selon l'une quelconque des revendications 1 à 5, comprenant en outre l'étape b-1), antérieure à l'étape b), dans laquelle un moule au sable est mouillé par immersion dans un bain d'eau ou pulvérisation avec de l'eau.

**7.** Méthode selon l'une quelconque des revendications 1 à 6, dans laquelle la fonte au moins partiellement modifiée en surface obtenue à l'étape d) comprend une couche de surface modifiée ayant une épaisseur de 0,15 mm à 2 mm.

**8.** Méthode selon l'une quelconque des revendications 1 à 7, dans laquelle le deuxième alliage métallique est un alliage en acier inoxydable, comprenant :

16 à 18 % en poids de Cr,
2 à 3 % en poids de Mo,
10 à 14 % en poids de Ni,
5 % en poids ou moins de Si,
2 % en poids ou moins de Mn,
0,08 % en poids ou moins de C,
0,5 % en poids ou moins de chaque autre élément, la quantité totale des éléments non spécifiés étant égale ou inférieure à 1 % en poids, et
du fer en tant que reste.

**9.** Méthode selon l'une quelconque des revendications 1 à 8, dans laquelle le L-DED est réalisé à un laser poudre de 1000 à 5000 W et un diamètre de point de 2 à 4 mm.

**10.** Pièce en fonte obtenue par la méthode telle que décrite selon l'une quelconque des revendications 1 à 9.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 201900012180 A1
- US 2021308795 A1

- DE 102011056307 A1

**Non-patent literature cited in the description**

- **LESTAN ZORAN et al.** Laser deposition of Metco 15E, Colmony 88 and VIM CRU 20 powders on cast iron and low carbon steel. *The International Journal of Advanced Manufacturing Technology*, 01 June 2013, vol. 66 (9-12), 2023-2028
- **J. BENNET et al.** Control of heating and cooling for direct laser deposition repair of cast iron components. *Proceedings of ISFA2016 2016 International Symposium on Flexible Automation Cleveland*, 03 August 2016

- **LIU YONGFENG et al.** Characterization of wear properties of the functionally graded material deposited on cast iron by laser-aided additive manufacturing. *The International Journal of Advanced Manufacturing Technology*, vol. 105 (10), 4097-4105